# EUROPEAN PATENT APPLICATION

(11) **EP 4 583 320 A1**
(43) Date of publication of application: **09.07.2025**
(21) Application number: 23858654.9
(22) Date of filing: 04.04.2023
(51) Int. Cl.: H01R 13/02

(54) **ROLLED JACK**

(30) Priority: 29.08.2022 CN 202222285532 U
(71) Applicant: Jonhon Optronic Technology Co., Ltd., Luoyang, Henan 471000 (CN)
(72) Inventor: GU, Lele, Luoyang, Henan 471000 (CN); WANG, Wenjie, Luoyang, Henan 471000 (CN); GU, Gailin, Luoyang, Henan 471000 (CN); LI, Chenguang, Luoyang, Henan 471000 (CN); LI, Liusheng, Luoyang, Henan 471000 (CN); WANG, Wei, Luoyang, Henan 471000 (CN)
(74) Representative: Osterhoff, Utz
(86) International application number: PCT/CN2023/086062
(87) International publication number: WO 2024/045613

(57) **Abstract**

The utility model relates to a rolled jack, including a jack body rolled by a conductive strip, where the jack body includes a contact end at a front end and a wire pressing end at a rear end; and the contact end includes a supporting portion and a slender waist-shaped elastic structure located at a front end of the supporting portion. each part of the rolled jack provided by the utility model is formed by rolling, and the cost is greatly reduced compared with machining and cold extrusion. In addition, a contact portion of the utility model is further provided with the slender waist-shaped elastic structure, so that the contact stability of the jack can be effectively enhanced.

## Description

### TECHNICAL FIELD

The utility model belongs to the technical field of contact elements, and particularly designs a rolled jack.

### BACKGROUND

A charging socket of an electric vehicle uses Φ3 and Φ6 jacks as indispensable parts for signal and power connection. An existing jack includes machined and cold-extruded parts and an elastomer. The cost of the jack is too high in the overall cost of the socket, which has become a bottleneck restricting the cost reduction of the socket.

An objective of the utility model is to provide a rolled jack with a novel structure, so that each part is formed by rolling and the manufacturing cost is reduced.

The objective of the utility model and the solution of the technical problem are implemented by the following technical solution. A rolled jack provided by the utility model includes a jack body rolled by a conductive strip, where the jack body includes a contact end at a front end and a wire pressing end at a rear end; and the contact end includes a supporting portion and a slender waist-shaped elastic structure located at a front end of the supporting portion.

The objective of the utility model and the solution of the technical problem may be further implemented by the following technical measures.

In the rolled jack, a frame of an end of the elastic structure away from the supporting portion extends in an axial direction and is divided into a plurality of petals by open grooves, and the petals separated by the open grooves are folded outward and form an outward expanded bell mouth structure in a circumferential direction.

In the rolled jack, a root portion of at least one petals forming the bell mouth structure is sunken inward to form a pre-contact protruding portion for being in first contact with a pin at a docking end, and the pre-contact protruding portion can be in contact with the pin at the docking end to complete preliminary connection before the pin at the docking end is in contact with the elastic structure.

The rolled jack further includes a sheath sleeved outside the contact end of the jack body, where the sheath is rolled by a strip, and is fixed and shaped through the cooperation of an overhead hook structure at a rolled closed seam.

In the rolled jack, a positioning fin is arranged on the sheath, and a positioning groove for the positioning fin to be inserted for positioning is formed in the supporting portion of the jack body.

In the rolled jack, at least one assembling barb for the matched positioning of a socket is distributed on the sheath in a circumferential direction.

In the rolled jack, the assembling barb is an outward folded and upwarped hanging sheet on the sheath.

In the rolled jack, at least one positioning protrusion for cooperating with a groove extending in a socket shell in an axial direction to position the assembling position of the assembling barb is further arranged at the periphery of the sheath.

In the rolled jack, the positioning protrusion is an outward protruding part in the middle of a positioning strip on the sheath.

In the rolled jack, a plurality of fixed folding sheets separated by a splitting groove extending in the axial direction are further arranged at a front end of the sheath, and the fixed folding sheets are bent inward and pressed on an inner wall of the bell mouth structure at a front end of the jack body.

In the rolled jack, a positioning boss for the matched positioning stop surface in the socket is further arranged between the contact end and the wire pressing end.

In the rolled jack, the positioning boss is an annular convex circle, and an inner wall of an annular temperature measuring component clings to an excircle of the positioning boss to implement annular contact temperature measurement.

Compared with the prior art, the utility model has significant advantages and beneficial effects. By the above technical solution, the utility model can achieve considerable technical progress and practicability, has wide industrial use value, and has the following advantages:
each part of the rolled jack provided by the utility model is formed by rolling, and the cost is greatly reduced compared with machining and cold extrusion.

The rolled jack provided by the utility model is provided with a wire sealing body and can meet the requirement of sealing after the rolled hole is matched with the corresponding jack; the assembling barb is provided and can be directly inserted and positioned after wire pressing; the positioning protrusion is provided and enables the assembling barb to accurately enter the corresponding groove; the slender waist-shaped elastic structure is provided and increases an insertion force and the contact area; the pre-contact protruding portion is provided and can reduce the protruding length of the contact point at the first time during docking and ensure the contact effect; and the sheath is provided, and can enhance the strength of the jack body and an insertion retaining force and reduce the rolling difficulty of the jack body.

### BRIEF DESCRIPTION OF DRAWINGS

FIG. 1 is a structural schematic diagram of a rolled jack of Embodiment 1 according to the utility model;
FIG. 2 is a sectional view of a rolled jack of Embodiment 1 according to the utility model;
FIG. 3 is a schematic diagram of a jack body of a rolled jack of Embodiment 1 according to the utility model; and
FIG. 4 is a fixed schematic diagram of a rolled jack of Embodiment 2 according to the utility model.
1. jack body
2. sheath
3. wire sheath crimping cylinder
4. conductor crimping cylinde
5. wire sealing body
6. positioning fin
7. elastic structure
8. assembling barb
9. positioning protrusion
10. open groove
11. supporting portion
12. fixed folding sheet
13. positioning groove
14. frame
15. pre-contact protruding portion
16. bell mouth structure
17. notch
20. temperature measuring component
21. positioning boss.

### DETAILED DESCRIPTION OF THE EMBODIMENTS

To further illustrate the technical methods and effects of the utility model for achieving the intended inventive objective, the implementation manners, structures, features and effects of a rolled jack provided according to the utility model are described below in detail with reference to the accompanying drawings and preferred embodiments.

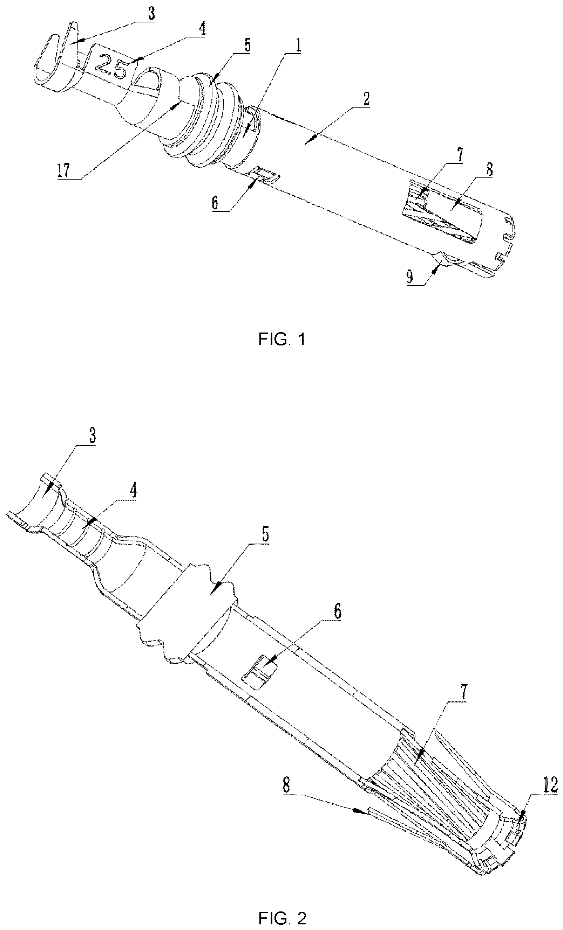

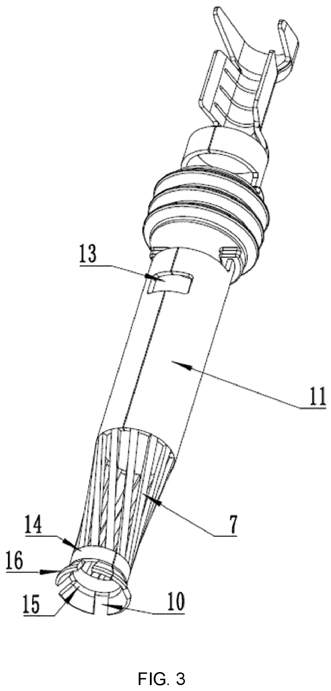

Referring to FIG. 1 to FIG. 3, which are structural schematic diagrams of each part of a rolled jack of Embodiment 1 according to the utility model, the rolled jack includes a jack body 1, where the jack body 1 is rolled by a conductive strip and includes a contact end at a front end and a wire pressing end at a rear end; the wire pressing end includes a wire sheath crimping cylinder 3 for fixing the jack and a wire sheath connected to a tail part of the jack, and a conductor crimping cylinder 4 for connecting and fixing a conductor inside a wire and the jack; and the wire sheath crimping cylinder 3 and the conductor crimping cylinder 4 are distributed at intervals from back to front in the axial direction of the jack body 1. The wire sheath crimping cylinder 3 and the conductor crimping cylinder 4 are of open wire pressing structures. Preferably, in the embodiments of the utility model, the wire sheath crimping cylinder 3 and the conductor crimping cylinder 4 are U-shaped.

The contact end includes an elastic contact portion and a supporting portion 11 from front to back, where the elastic supporting portion is of a slender waist-shaped elastic structure 7 formed by twisting or bending inward. The waist portion of the elastic structure 7 is shrunk inward, so that the contact force during insertion of the jack can be enhanced, and the contact area can be enlarged, thereby preventing partial contact of the jack and the adaptive pin due to an insertion direction during the contact between the jack and the adaptive pin.

In the embodiments of the utility model, a reed of the elastic structure 7 is distributed at a front end of the conductive strip of the jack body 1 in a fence shape, a frame 14 connected to the reed is further arranged at an end of the elastic structure 7 away from the supporting portion, the frame 14 extends at a side away from the reed in the axial direction and is divided into a plurality of petals by a plurality of open grooves 10 extending in the axial direction, each of the petals is folded outward and forms an outward expanded bell mouth structure 16 in a circumferential direction, a root portion of at least one of the petals forming the bell mouth structure 16 is sunken inward to form a pre-contact protruding portion 15 in first contact with a pin at a docking end, and the pre-contact protruding portion 15 can be in contact with the pin at the docking end before the pin at the docking end is in contact with the elastic structure 7, so as to complete preliminary connection and implement signal transmission. In this embodiment, the pre-contact protruding portion 15 is formed by bending the root portion of each of the petals forming the bell mouth structure 16. That is, the root portion of each of the petals is bent inward, and other parts are folded outward. That is, the bell mouth structure 16 is formed by bending twice.

In the embodiments of the utility model, the elastic structure 7 is a slender waist-shaped structure formed by rolling and rotating the fence-shaped conductive strip. the slender waist-shaped elastic structure can increase the contact area during docking and ensure the contact strength.

The jack body 1 further includes a sealing portion for connecting the contact end and the wire pressing end, where a notch 17 is formed in a side wall of the sealing portion, the wire sealing body 5 is fixed and formed on the notch 17 by a mold forming process, the wire pressing end and the contact portion are separated at two sides of the wire sealing body 5, and the wire sealing body 5 can cooperate with a shell for sealing when the rolled jack is assembled in the shell. The wire sealing body 5 is fixed on the notch 17, so that a contact force between the jack body and the wire sealing body 5 can be enhanced, thereby ensuring the connection reliability of the jack body and the wire sealing body and ensuring the sealing effect. The wire sealing body may be a rubber wire sealing body, or may be a wire sealing body formed by forming plastic or other materials and adding an O-shaped ring or other sealing materials.

The rolled jack provided by the utility model further includes a sheath 2 sleeved outside the contact end of the jack body 1, the sheath 2 is of a cylindrical structure rolled by a strip, and the sheath 2 is fixed and shaped through the cooperation of an overhead hook structure at a rolled seam. Preferably, the overhead hook structure includes a wedge-shaped overhead hook and an adaptive overhead hook groove; the wedge-shaped overhead hook and the overhead hook groove are oppositely arranged on two sides of the rolled closed seam; the wedge-shaped overhead hook and the overhead hook groove are mutually buckled/occluded after the sheath 2 is rolled, so that the sheath maintains a rolled shape to implement fixed formation; and the closed seam does not require welding and a weld seam is not formed, so the rolling forming efficiency is high. Furthermore, the sheath 2 is sleeved outside the contact end of the jack body 1, so that the strength of the rolled jack can be enhanced, the contact end of the jack body can be kept in a rolled shape, the arrangement of a fixed, occluded or buckled structure at the rolled closed seam of the contact end of the jack body can be canceled, and the fixed forming difficulty of the jack body 1 can be reduced.

In the embodiments of the utility model, the rolled closed seam of the sheath 2 and the jack body 1 are distributed radially in a staggered manner.

To enhance the connection between the sheath 2 and the jack body 1, a positioning groove 13 is formed in the jack body 1, a positioning fin 6 is arranged at the corresponding position of the sheath 2, and the positioning fin 6 is bent and inserted into the positioning groove 13 to fix the sheath 2 and the jack body 1. Preferably, a plurality of positioning grooves 13 are distributed in the circumferential direction, multiple groups of corresponding positioning fins 6 are provided, and each group has two positioning fins oppositely inserted into two sides of the positioning grooves 13 in the circumferential direction. The positioning grooves 13 are through grooves, and the positioning fins 6 are inserted into the through grooves, which is not limited thereto.

At least one assembling barb 8 extending in the axial direction is distributed on the sheath 2 in the circumferential direction, and the rolled jack can be positioned in the socket through the assembling barb 8. That is, when the rolled jack is assembled, the assembling and positioning can be implemented through the cooperation of the assembling barb 8 extending out of the sheath 2 and a corresponding boss in the socket shell. In the embodiments of the utility model, the assembling barb 8 is formed by outward folding a hanging sheet only with a fixed front end and cut on the sheath 2.

To ensure that the assembling barb 8 can arrive at a position cooperating with the boss in the socket shell during mounting of the rolled jack and ensuring the opposite positions of the two in the radial direction, at least one positioning protrusion 9 for cooperating with a groove extending in the socket shell in the axial direction to implement axial guidance and radial limitation is further arranged at the periphery of the sheath 2 of the utility model. The arrangement of the positioning protrusion 9 can ensure that the assembling barb accurately arrives at the position cooperating with the boss in the socket shell during assembling, thereby implementing the matched positioning of the assembling barb and the boss and avoiding that positioning cannot be implemented due to the staggered assembling barb and the boss.

In the embodiments of the utility model, the positioning protrusion 9 is formed by fixing two ends of the sheath 2 and outward protruding free positioning strips on two sides. At this time, the positioning protrusion 9 is convex waist-shaped. In other embodiments of the utility model, the positioning protrusion may also be a convex point, a convex strip or other shapes protruding outward on the sheath 2.

A plurality of fixed folding sheets 12 separated by a plurality of splitting grooves extending in the axial direction are further arranged at the front end of the sheath 2, and the fixed folding sheets 12 are bent inward and pressed on an inner wall of the bell mouth structure 16 at the front end of the jack body 1, thereby fixing the front end of the sheath 2 and the front end of the jack body 1. The arrangement of the fixed folding sheets 12 of the utility model achieves the fixation between the front ends of the sheath 2 and the jack body 1 and ensures the stability and reliability of connection between the sheath and the jack body; furthermore, the presence of the sheath 2 enhances the strength of the front end of the jack body 1 and an elastic retaining force of a crown spring, and enhances the service life and the use performance of the rolled jack.

In the embodiments of the utility model, during assembling of the rolled jack, a wire is first crimped by the conductor crimping cylinder, then the wire sheath and the wire sealing body are crimped by the wire sheath crimping cylinder, and finally the rolled jack is inserted into a socket cavity. A fixed protrusion is first in contact with a groove inside the socket to enable the assembling barb to align with the boss corresponding to the pin and completely fix the jack. During use, the pin is first in contact with a jack pre-contact protrusion to complete preliminary connection and achieve signal transmission, and then continuously deepens to be in contact with the crown spring to form stable contact.

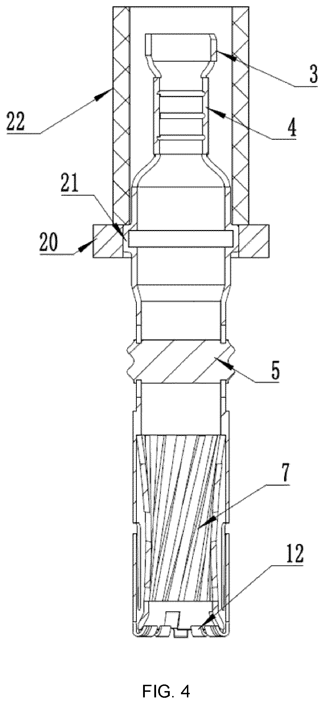

Referring to FIG. 4, which is a structural schematic diagram of Embodiment 2 according to the utility model, this embodiment is different from Embodiment 1 in that: the design of the assembling barb 8 and the positioning protrusion 9 on the sheath 2 is canceled, a positioning portion is further arranged between the sealing portion and the wire pressing end of the jack body 1, the positioning portion is a positioning boss 21 formed by outward protruding the jack body 1, the positioning boss 21 is an annular convex circle or other special-shaped protrusions, and the positioning boss 21 cooperates with a stop surface in the socket through front and rear end faces of the positioning boss to achieve positioning. The arrangement of the annular positioning boss 21 of the utility model can achieve the reliable positioning of the jack in the socket, enhance the fixing strength of the jack and prevent the jack from loosening due to oblique insertion or an excessive plugging and unplugging force. In the embodiments of the utility model, the positioning boss 21 is formed by outward pressing a strip which is rolled to form the jack body, and a ring groove with the shape consistent with that of the positioning boss 21 is formed in the jack body 1 at the positioning portion.

The rolled jack provided by the utility model is further provided with a temperature measuring component 20. During assembling of the jack, the annular temperature measuring component is required to pass through the front end of the jack from front to back to arrive at a temperature measuring part, the temperature measuring part of the jack is located behind a sealing plug 5, and an outer diameter of the sealing plug 5 is greater than an outer diameter of other parts of the jack except the positioning boss 21. Therefore, to achieve smooth assembling, if the temperature measuring component 20 is sleeved at a part between the sealing plug 5 and the positioning boss 21, an inner diameter of the annular temperature measuring component is necessarily greater than an outer diameter of the temperature measuring part on the jack, that is, a gap is present between the temperature measuring part and the annular temperature measuring component, and the temperature measuring part and the annular temperature measuring component can achieve partial attachment, but cannot achieve annular contact for temperature measurement.

In the embodiments of the utility model, the positioning boss 21 is an annular convex circle, and the temperature measuring component 20 is annular, tightly sleeved outside the annular convex circle and closely attached to the peripheral surface of the positioning boss 21 to achieve annular contact temperature measurement. The arrangement of the positioning boss 21 of the utility model can increase the inner diameter of the temperature measuring component 20 on the premise of ensuring that the temperature measuring part of the jack body is attached to the temperature measuring part, so that the sealing plug 5 can pass through a cavity of the temperature measuring component 20 and prevent the temperature measuring part from being scratched or interfering with the movement of the sealing plug 5, the inner diameter of the temperature measuring component 20 can be consistent with the outer diameter of the positioning boss 21, circumferential attached temperature measurement can be achieved, the temperature measuring contact area can be enlarged, and the temperature measuring accuracy can be improved.

In this embodiment, during assembling of the rolled jack, first, the temperature measuring component 20 is assembled at the periphery of the positioning boss 21 from front to back, then the wire is crimped by the conductor crimping cylinder, the wire sheath and the sealing plug are crimped by the wire sheath crimping cylinder, and finally, the rolled jack is inserted into the socket cavity, and a rear end face of the fixed boss is in stop fit with an insulator 22 in the socket for positioning. During use, the pin is first in contact with a jack pre-contact protrusion to complete preliminary connection and achieve signal transmission, and then continuously deepens to be in contact with the crown spring to form stable contact.

In this embodiment, the jack is positioned through the stop fit between the end face of the positioning boss and the stop surface in the socket. This positioning mode is reliable, has a large retaining force, is not easy to deform, and can effectively solve the problem that the existing jack has insufficient retaining force and is easy to damage when being positioned by the barb.

In addition, the arrangement of the positioning boss of the jack of this embodiment can meet the requirement of annular attachment of the temperature measuring component and the temperature measuring part on the premise of meeting a size relationship between the sealing plug and the temperature measuring component, eliminate a gap between the temperature measuring component and the temperature measuring part and achieve annular attachment temperature measuring, thereby enabling the temperature measuring result more accurate.

The above are only preferred embodiments of the utility model and are not intended to limit the utility model in any form. Although the utility model has been disclosed by the preferred embodiments, it is not intended to limit the utility model. Any person familiar with the profession can make some equivalent embodiments changed or modified into equivalent change by using the technical contents disclosed above without departing from the scope of the technical solution of the utility model. However, any simple modification, equivalent change and modification made on the above embodiments according to the technical essence of the utility model without departing from the content of the technical solution of the utility model still belongs to the scope of the technical solution of the utility model.

## Claims

1. A rolled jack, comprising a jack body rolled by a conductive strip, wherein the jack body comprises a contact end at a front end and a wire pressing end at a rear end; and the contact end includes a supporting portion and a slender waist-shaped elastic structure located at a front end of the supporting portion.

2. The rolled jack according to claim 1, wherein a frame of an end of the elastic structure away from the supporting portion extends in an axial direction and is divided into a plurality of petals by open grooves, and the petals separated by the open grooves are folded outward and form an outward expanded bell mouth structure in a circumferential direction.

3. The rolled jack according to claim 2, wherein a root portion of at least one of the petals forming the bell mouth structure is sunken inward to form a pre-contact protruding portion for being in first contact with a pin at a docking end, and the pre-contact protruding portion is capable of being in contact with the pin at the docking end to complete preliminary connection before the pin at the docking end is in contact with the elastic structure.

4. The rolled jack according to claim 2 or 3, further comprising a sheath sleeved outside the contact end of the jack body, wherein the sheath is rolled by a strip, and is fixed and shaped through the cooperation of an overhead hook structure at a rolled closed seam.

5. The rolled jack according to claim 4, wherein a positioning fin is arranged on the sheath, and a positioning groove for the positioning fin to be inserted for positioning is formed in the supporting portion of the jack body.

6. The rolled jack according to claim 5, wherein at least one assembling barb for the matched positioning of a socket is distributed on the sheath in a circumferential direction.

7. The rolled jack according to claim 6, wherein at least one positioning protrusion for cooperating with a groove extending in a socket shell in an axial direction to position the assembling position of the assembling barb is further arranged at the periphery of the sheath.

8. The rolled jack according to claim 7, wherein the positioning protrusion is an outward protruding part in the middle of a positioning strip on the sheath.

9. The rolled jack according to claim 4, wherein a plurality of fixed folding sheets separated by a splitting groove extending in the axial direction are further arranged at a front end of the sheath, and the fixed folding sheets are bent inward and pressed on an inner wall of the bell mouth structure at a front end of the jack body.

10. The rolled jack according to claim 1, wherein a positioning boss for the matched positioning of a stop surface in the socket is further arranged between the contact end and the wire pressing end.

11. The rolled jack according to claim 10, wherein the positioning boss is an annular convex circle, and an inner wall of an annular temperature measuring component clings to an excircle of the positioning boss to implement annular contact temperature measurement.
